# EUROPÄISCHE PATENTSCHRIFT

(11) **EP 0 850 558 B1**
(45) Veröffentlichungstag und Bekanntmachung des Hinweises auf die Patenterteilung: **27.03.2002**
(21) Anmeldenummer: 97203951.5
(22) Anmeldetag: 16.12.1997
(51) Int. Cl.: A01F 15/07

(54) **Rundballenpresse mit Riemen**
Belt system rotobaler
Presse enrouleuse à courroies

(30) Priorität: 23.12.1996 EP 96203688
(43) Veröffentlichungstag der Anmeldung: 01.07.1998
(73) Patentinhaber: MAASLAND N.V., 3155 PD Maasland (NL)
(72) Erfinder: van der Lely, Olaf, 6300 Zug (CH)
(74) Vertreter: Corten, Maurice Jean F.M.

(56) Entgegenhaltungen:
- EP-A- 0 070 537
- DE-A- 2 626 263
- US-A- 4 273 036

## Beschreibung

Die Erfindung betrifft eine Rundballenpresse nach dem Oberbegriff des Patentanspruches 1.

Rundballenpressen mit Riemen als Förder- und Presseinrichtung haben sich im praktischen Einsatz insbesondere auch bei kritischem Material wie sehr trockenem, sprödem Gerstenstroh erfolgreich bewährt. Es gilt vor allem bei Heu, Luzerne und anderen blattreichen Gütern Bröckelverluste zu vermeiden, die dadurch entstehen, dass während des Pressvorganges durch den jeweils von zwei benachbarten Riemen gebildeten Spalt Erntegutteilchen hinausfallen auf den Erdboden. Zur Lösung dieses Problems wird in der EP A1 0095 689 vorgeschlagen, die Spalte zwischen den Riemen zu minimieren.

Für das Verarbeiten von Silagegütern sind diese Pressen ohne zusätzliche, besondere Einrichtungen weniger geeignet, weil feuchte Halmgutteilchen an der den Ballen berührenden Riemenoberfläche ankleben bzw. anhaften und sich dieses Material beim Lauf der Riemen über die Rollen um diese wickelt und zu Störungen des Riemenlaufes führt. Das Wickeln von Material um die Rollen lässt sich beispielsweise durch feststehende oder rotierende Abstreifmittel vermeiden. Ferner wird in der EP B1 0070 537 beschrieben und dargestellt, benachbarte Riemen im Bereich der Umlenkrolle über der Pick-up durch zusätzliche Umlenkrollen in radialer Richtung gegeneinander zu versetzen, um Öffnungen zu schaffen, durch die das abgestreifte Material hinausfallen kann und sich nicht in dem Zwischenraum ansammelt, der von den dem Ballen zugewandten und den dem Ballen abgewandten Riemenabschnitten gebildet wird.

Die US-A-4 273 036 zeigt eine Rundballenpresse bestehend aus einem in seiner Grösse veränderlichen Ballenpressraum, der von einem vorderen und einem hinteren Riemensatz begrenzt ist, wobei zwei benachbarte Riemen der beiden Riemensätze gleich grosse Spaltenabstände aufweisen.

Der Erfindung liegt die Aufgabe zugrunde, eine hinsichtlich der Riemenanordnung einfache und kostengünstige Rundballenpresse zu schaffen, die sowohl sehr trockene als auch feuchte Halmgüter störungsfrei und möglichst verlustfrei ohne zusätzliche Umlenkrollen verarbeitet.

Zur Lösung dieser Aufgabe wird erfindungsgemäss vorgeschlagen, dass wenigstens zwei benachbarte Riemen des einen Riemensatzes einen grösseren seitlichen Spaltabstand aufweisen als zwei benachbarte Riemen des anderen Riemensatzes.

Es hat sich in der Praxis gezeigt, dass die Wickelgefahr an der in Ballendrehrichtung gesehen letzten Umlenkrolle am grössten ist, weil diese von einem relativ langen Riemenabschnitt überlaufen wird, der vorher den Ballen berührte und presste und dann relativ viele Halmgutteile trägt, die die Umlenkrolle um sich wickeln möchte. In Verbindung mit den bekannten Abstreifmitteln schafft die neue Gestaltung der Rundballenpresse mit zwei Riemensätzen und durch die grösseren Spaltabstände eine sehr einfache Möglichkeit, dass von der Umlenkrolle abgestreiftes Material auf kürzestem Wege und ohne zusätzliche Fördermittel aus dem gefährdeten Bereich nach unten entfallen kann z.B. auf die darunter befindliche Pick-up. Durch die kleineren Riemenabstände derjenigen Riemen, die hinter dem Aufsammler das noch wenig verdichtete Material berühren, kann kaum Material hindurchtreten, so dass sowohl Bröckelverluste und Wickelerscheinungen vermieden werden. Die Ausführung ist einfach und kostengünstig und arbeitet bei allen Gutsarten und -beschaffenheiten deutlich besser als die am Markt z. Zt. angeboteten Rundballenpressen mit Riemen.

Je nachdem, welche Ballendrehrichtung in der Rundballenpresse gewählt wurde, liegt die kritische Umlenkrolle, also die, die am längsten mit dem ballenberührenden Riemenabschnitt in Verbindung steht, entweder im Vordergehäuse oder im Hintergehäuse. Läuft der dem Ballen zugewandte Riemenabschnitt im Vordergehäuse während des Betriebes z.B. nach unten, weisen die im Vordergehäuse angeordneten Riemen einen grösseren seitlichen Abstand zueinander auf. Das hat den Vorteil, dass abgestreiftes Material auf die Pick-up fallen kann und wieder mit in den Ballen gewickelt wird. Liegt die kritische Umlenkrolle im Hintergehäuse, weisen entsprechend dessen Riemen einen grösseren seitlichen Abstand auf.

Eine besonders kostengünstige Ausführung wird dann erreicht, wenn in dem betreffenden Riemensatz wenigstens ein Riemen weniger als in dem anderen angeordnet ist. Optimale Verhältnisse ergeben sich dann, wenn die Spaltbreite zwischen zwei benachbarten Riemen etwa ein Drittel der Breite eines Riemens entspricht. Einerseits sind dann die Spaltöffnungen zum Hinausfallen des abgestreiften Materials günstig, andererseits ist die am Ballen wirksame Riemenoberfläche noch gross genug, um eine sichere Ballendrehung zu gewährleisten und das Material zu verdichten.

Hinsichtlich weiterer Ausgestaltungen wird auf die übrigen Unteransprüche verwiesen.

In der Zeichnung sind zwei Beispiele des Erfindungsgegenstandes dargestellt. Hierbei zeigt:
Figur 1 einen Längsschnitt durch eine Rundballenpresse in schematischer Darstellung;
Figur 2 eine Teildarstellung des Riemensatzes im Vordergehäuse der Rundballenpresse gemäss Figur 1 in Pfeilrichtung A gesehen;
Figur 3 eine Teildarstellung des Riemensatzes im Hintergehäuse der Rundballenpresse gemäss Figur 1 in Pfeilrichtung B gesehen und
Figur 4 eine zweite Ausführungsform eines Riemensatzes im Vordergehäuse der Rundballenpresse gemäss Figur 1 in Teildarstellung in Pfeilrichtung A gesehen.

Die Rundballenpresse besitzt ein zweiteiliges Pressraumgehäuse, bestehend aus einem Vordergehäuse 1, welches gestellfest auf einem Fahrgestell 2 ruht und einem Hintergehäuse 3, welches um eine obere Schwenkachse 4 in eine nicht dargestellte Entladestellung aufklappbar ist.

Im Pressraumgehäuse 1, 3 wird ein Ballenpressraum 5, dessen Durchmesser sich bei der Herstellung eines Ballens vergrössern kann, unten von einer Bodenwalze 6 und oben durch einen vorderen Riemensatz 7 sowie einen hinteren Riemensatz 8 begrenzt.

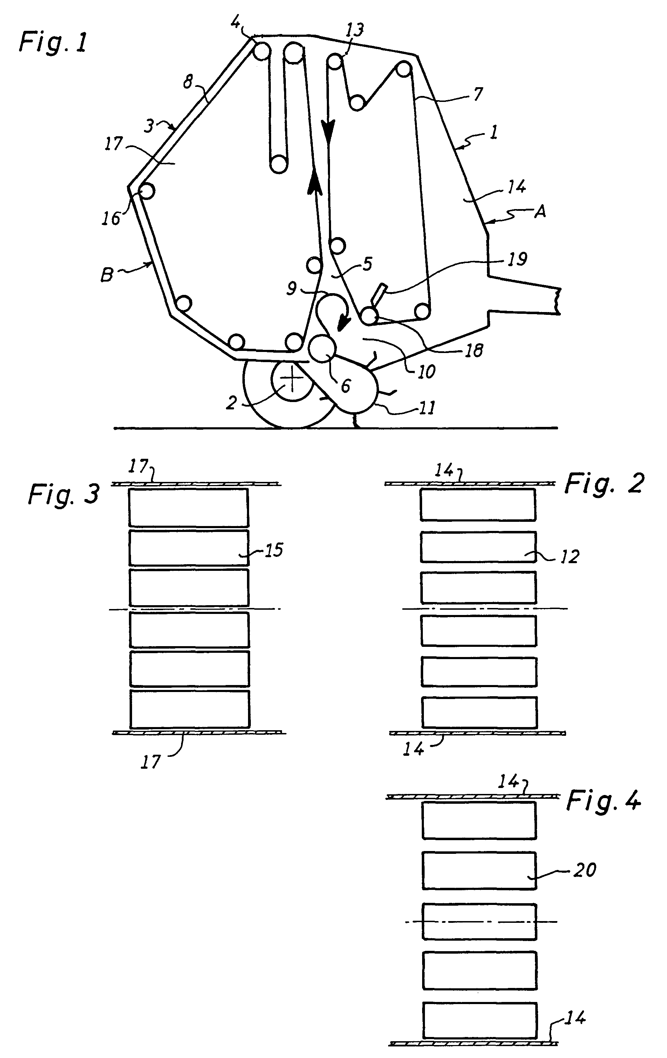

Die Bodenwalze 6 und die Riemensätze 7, 8 werden während der Ballenherstellung in einer gemeinsamen Umlaufrichtung 9 angetrieben. Zwischen Bodenwalze 6 und Unterseite des vorderen Riemensatzes 7 ist ein Einzugsspalt 10 freigelassen. Vor und unterhalb dieses Spaltes 10 ist eine Aufsammeltrommel 11 gelagert. Der vordere Riemensatz 7, siehe Figur 2, besteht aus sechs nebeneinander angeordneten Riemen 12, die z.B. jeweils eine Breite von 155 mm aufweisen und über Umlenkrollen 13 geführt sind, die zum Teil ortsfest aber drehbar und zum Teil nachgiebig in vorderen Seitenwandabschnitten 14 des Vordergehäuses 1 gelagert sind, die den Ballenpressraum 5 beidseitig in axialer Richtung begrenzen. Bei einer lichten Breite zwischen den Seitenwandabschnitten 14 von z.B. 123 cm ergibt sich bei gleichmässiger Riemenverteilung über die Breite des Pressraumes 5 ein Spaltabstand von knapp 6 cm zwischen zwei benachbarten Riemen 12, wobei die Riemen 12 möglichst geringen Abstand (1 cm) von den Seitenwandabschnitten 14 aufweisen sollen, um hier Materialeinzug zu vermeiden.

Der hintere Riemensatz 8, siehe Figur 3, besteht aus sechs nebeneinander angeordneten Riemen 15, die z.B. jeweils eine Breite von 185 mm aufweisen und über Umlenkrollen 16 geführt sind, die zum Teil ortsfest aber drehbar und zum Teil nachgiebig in hinteren Seitenwandabschnitten 17 des Hintergehäuses 3 gelagert sind, die den Ballenpressraum 5 beidseitig in axialer Richtung begrenzen. Bei einer lichten Breite zwischen den Seitenwandabschnitten 17 von z.B. 123 cm ergibt sich bei gleichmässiger Riemenverteilung ein Spaltabstand von nur ca. 15 mm zwischen zwei benachbarten Riemen 15, so dass durch diese kleine Spalte kein Material gelangen kann.

Die untere Umlenkrolle 18 des vorderen Riemensatzes 7 ist mit einer an sich bekannten Abstreifleiste 19 versehen.

Während des Pressbetriebes streift diese Abstreifleiste 19 Material von der Umlenkrolle 18 ab, so dass sich kein Material auf dieser aufbauen kann. Durch die grossen Spaltabstände des vorderen Riemensatzes fällt dieses abgestreifte Material direkt nach unten vor die Aufsammeltrommel 11 und wird von dieser erneut aufgenommen.

Figur 4 zeigt eine zweite Ausführungsform der Erfindung. Das Hintergehäuse 3 weist eine Riemenanordnung gemäss Figur 3 auf. Im Vordergehäuse 1 werden die gleichen Riemen wie im Hintergehäuse 3 (Riemen 15) benutzt, jedoch sind nur fünf Riemen 20 vorgesehen, so dass sich eine Spaltbreite zwischen zwei benachbarten Riemen von 70 mm ergibt bei einer Riemenbreite von 186 mm.

Bei Rundballenpressen mit umgekehrter Ballendrehrichtung, also in zu Pfeil 9 entgegengesetzter Drehrichtung, weist das Vordergehäuse 1 eine Riemenanordnung gemäss Figur 3 auf, während das Hintergehäuse 3 eine Riemenanordnung gemäss Figur 2 oder Figur 4 aufweist. Hier ist der Reinigungseffekt durch das Öffnen und das Schliessen des Hintergehäuses 3 besonders vorteilhaft, jedoch wird das hinausgefallene Material nicht mehr von Aufsammeltrommel 11 aufgenommen.

## Patentansprüche

1. Rundballenpresse für landwirtschaftliche Halmgüter, bestehend aus einem einen Einzugsspalt (10) aufweisenden und in seiner Grösse veränderlichen Ballenpressraum (5), welcher von mehreren, einzeln nebeneinander angeordneten, über Rollen (13, 16, 18) geführten Riemen gebildet wird, wobei die Rundballenpresse einen vorderen Riemensatz (7) aufweist, der in einem Vordergehäuse (1) angeordnet ist und einen hinteren Riemensatz (8), der in einem Hintergehäuse (3) angeordnet ist, **dadurch gekennzeichnet, dass** wenigstens zwei benachbarte Riemen (12, 20) des einen Riemensatzes einen grösseren seitlichen Spaltabstand aufweisen als zwei benachbarte Riemen (15) des anderen Riemensatzes.

2. Rundballenpresse nach Anspruch 1, dessen dem Ballenpressraum (5) zugewandter Riemenabschnitt im Vordergehäuse (1) während des Betriebes nach unten läuft, **dadurch gekennzeichnet, dass** die im Vordergehäuse (1) angeordneten Riemen (12, 20) einen grösseren seitlichen Abstand zueinander aufweisen.

3. Rundballenpresse nach Anspruch 1, dessen dem Ballenpressraum zugewandter Riemenabschnitt im Vordergehäuse (1) während des Betriebes nach oben läuft, **dadurch gekennzeichnet, dass** die im Hintergehäuse (3) angeordneten Riemen einen grösseren seitlichen Abstand aufweisen.

4. Rundballenpresse nach einem der Ansprüche 1 bis 3, **dadurch gekennzeichnet, dass** zur Erzielung eines grösseren Spaltabstandes in dem betreffenden Riemensatz (7) wenigstens ein Riemen (20) weniger als in dem anderen angeordnet ist.

5. Rundballenpresse nach einem der Ansprüche 1 bis 3, **dadurch gekennzeichnet, dass** zur Erzielung eines grösseren Spaltabstandes in dem betreffenden Riemensatz (7) wenigstens ein Riemen (12) kleinerer Breite angeordnet ist.

6. Rundballenpresse nach einem oder mehreren der vorhergehenden Ansprüche, **dadurch gekennzeichnet, dass** der andere Riemensatz als geschlossene Bahn ausgebildet ist.

7. Rundballenpresse nach einem oder mehreren der vorhergehenden Ansprüche, **dadurch gekennzeichnet, dass** die Spaltbreite zwischen zwei benachbarten Riemen (12, 20) etwa ein Drittel der Breite eines Riemens (12, 20) entspricht.

8. Rundballenpresse nach einem oder mehreren der vorhergehenden Ansprüche, **dadurch gekennzeichnet, dass** wenigstens einer der Rollen (18) Abstreifmittel, wie z.B. ein Schneckenförderer oder eine Abstreifleiste (19) zugeordnet sind, um um die Rolle (18) gewickeltes Material abzustreifen.

9. Rundballenpresse nach einem oder mehreren der vorhergehenden Ansprüche, **dadurch gekennzeichnet, dass** das Hintergehäuse zur Entladung aufklappbar ist.

## Claims

1. Rotobaler for agricultural crops, comprising a baling chamber (5) which has an intake gap (10), is variable in size and is formed by a plurality of belts arranged individually one beside the other and guided over rollers (13, 16, 18), the rotobaler having a front set of belts (7) arranged in a front housing (1) and a rear set of belts (8) arranged in a rear housing (3), **characterised in that** at least two adjacent belts (12, 20) of one set of belts have a larger lateral gap spacing than two adjacent belts (15) of the other set of belts.

2. Rotobaler according to Claim 1, of which the belt section, facing the baling chamber (5), in the front housing (1) runs downwards during operation, **characterised in that** the belts (12, 20) arranged in the front housing (1) have a larger lateral spacing from one another.

3. Rotobaler according to Claim 1, of which the belt section, facing the baling chamber, in the front housing (1) runs upwards during operation, **characterised in that** the belts arranged in the rear housing (3) have a larger lateral spacing.

4. Rotobaler according to one of Claims 1 to 3, **characterised in that**, to obtain a larger gap spacing, at least one belt (20) less is arranged in the set of belts (7) concerned than in the other set of belts.

5. Rotobaler according to one of Claims 1 to 3, **characterised in that**, to obtain a larger gap spacing, at least one belt (12) of smaller width is arranged in the set of belts (7) concerned.

6. Rotobaler according to one or more of the preceding claims, **characterised in that** the other set of belts is designed as a closed web.

7. Rotobaler according to one or more of the preceding claims, **characterised in that** the gap width between two adjacent belts (12, 20) corresponds to about one third of the width of a belt (12, 20).

8. Rotobaler according to one or more of the preceding claims, **characterised in that** stripping means, such as for example a worm conveyor or a stripping bar (19), are assigned to at least one of the rollers (18) in order to strip off material wound around the roller (18).

9. Rotobaler according to one or more of the preceding claims, **characterised in that** the rear housing can be swung open for unloading.

## Revendications

1. Presse à balles rondes pour matériaux de brin agricoles, composée d'une chambre de compactage de balle (5) présentant une fente d'introduction (10) et de dimension variable, la chambre étant formée par plusieurs courroies agencées côte à côte et guidées sur des rouleaux (13, 16, 18), la presse à balles rondes présentant un jeu de courroies avant (7) qui est agencé dans un boîtier avant (1) et un jeu de courroies arrière (8) qui est agencé dans un boîtier arrière (3), **caractérisée en ce qu'**au moins deux courroies adjacentes (12, 20) de l'un des jeux de courroies présentent un écartement de fente latéral plus grand que deux courroies adjacentes (15) de l'autre jeu de courroies.

2. Presse à balles rondes selon la revendication 1, dont la section de courroie tournée vers la chambre de compactage de balle (5) s'étend en cours de fonctionnement vers le bas dans le boîtier avant (1), **caractérisée en ce que** les courroies (12, 20) agencées dans le boîtier avant (1) présentent un écartement latéral plus grand l'une par rapport à l'autre.

3. Presse à balles rondes selon la revendication 1, dont la section de courroie tournée vers la chambre de compactage de balle (5) s'étend en cours de fonctionnement vers le haut dans le boîtier avant (1), **caractérisée en ce que** les courroies (12, 20) agencées dans le boîtier arrière (1) présentent un écartement latéral plus grand.

4. Presse à balles rondes selon l'une quelconque des revendications 1 à 3, **caractérisée en ce que** pour obtenir un écartement de fente plus grand, au moins une courroie (20) de moins que dans l'autre jeu est agencée dans le jeu de courroies (7) en question.

5. Presse à balles rondes selon l'une quelconque des revendications 1 à 3, **caractérisée en ce que** pour obtenir un écartement de fente plus grand, au moins une courroie (12) de largeur inférieure est agencée dans le jeu de courroies (7) en question.

6. Presse à balles rondes selon l'une quelconque des revendications précédentes, **caractérisée en ce que** l'autre jeu de courroies est réalisé comme une trajectoire fermée.

7. Presse à balles rondes selon l'une quelconque ou plusieurs des revendications précédentes, **caractérisée en ce que** la largeur de fente entre deux courroies adjacentes (12, 20) correspond à environ un tiers de la largeur d'une courroie (12, 20).

8. Presse à balles rondes selon l'une quelconque ou plusieurs des revendications précédentes, **caractérisée en ce que** des moyens de raclage sont affectés à au moins l'un des rouleaux (18), comme par exemple une vis d'alimentation ou une raclette (19), pour racler le matériau enroulé autour du rouleau (18).

9. Presse à balles rondes selon l'une quelconque ou plusieurs des revendications précédentes, **caractérisée en ce que** le boîtier arrière peut être replié pour le déchargement.
